# NEW EUROPEAN PATENT SPECIFICATION

(11) **EP 0 119 709 B2**
(45) Date of publication and mention of the opposition decision: **29.01.1997**
(45) Mention of the grant of the patent: 02.11.1988
(21) Application number: 84300762.6
(22) Date of filing: 07.02.1984
(51) Int. Cl.: C10G 45/64, B01J 29/70

(54) **Process for the dewaxing of hydrocarbon fractions**
Verfahren zur Entwachsung von Kohlenwasserstofffraktionen
Procédé de déparaffinage de fractions d'hydrocarbures

(30) Priority: 10.02.1983 JP 19629/83; 08.04.1983 JP 60682/83
(43) Date of publication of application: 26.09.1984
(73) Proprietor: TORAY INDUSTRIES, INC., Tokyo 103 (JP); FUJI OIL COMPANY, LIMITED, Chiyoda-ku Tokyo (JP)
(72) Inventor: Iwayama, Kazuyoshi, Kanagawa-ken (JP); Inoue, Takehisa, Tokyo (JP); Sato, Kimio, Kimitsu-gun Chiba-ken (JP); Hayakawa, Norio, Chiba-ken (JP); Fujii, Masaki, Kimitsu-gun Chiba-ken (JP)
(74) Representative: Coleiro, Raymond

(56) References cited:
- EP-A- 0 057 016
- GB-A- 1 161 974
- GB-A- 1 469 345
- US-A- 3 516 925
- US-A- 3 700 585
- US-A- 3 702 886
- US-E- 28 398
- RABO: ZEOLITE CHEMISTRY AND CATALYSIS (ACS MONOGRAPH 171), 1976, pages 680-713, American Chemical Society, Washington, DC, US: "CSICERY: shape selective catalysis"
- J. Catal., 95, (1985), pages 609-612, Oin et al
- P.L. Kirk, F.L. Shaffer, Rev. Sci. Inst.14 (11)785 (1948)

## Description

This invention relates to a process for improving the fluidity of hydrocarbon fractions and more particularly, to a process for the dewaxing of hydrocarbon fractions typical of which are fractions from petroleum.

In recent years, kerosene, gas oil (an oil prescribed in JIS-Japanese Industrial Standard-K 2204) and A fuel oil (the first class fuel oil prescribed in JIS K 2205), which are called middle distillate, occupy an increasing proportion of the demand for petroleum products with the pronounced tendency toward a lowering of demands for B and C fuel oils (corresponding to the second and third class fuel oils prescribed in JIS K 2205). One of the useful methods for improving a yield of the middle distillate includes a dewaxing process in which pour points of gas oil and A fuel oil are lowered. In general, if hydrocarbon fractions have a good or improved fluidity or pouring property at the time of storage, transportation or combustion when used in various applications, there are obtained great benefits not only of increasing the yield of the middle distillate, but also of increasing the flexibility on selection of crude oil in the refining of petroleum and permitting much easier handling of petroleum products in winter.

Known dewaxing processes for improving fluidity of lubricant oils, which have been widely used, include solvent dewaxing processes typical of which is a MEK process, and urea dewaxing processes. However, these known dewaxing processes are all complicated in the steps employed and high in operation cost, with another disadvantage that secondarily produced waxes (by-products) have not always a sufficiently high value. Accordingly, there is a demand for a new, effective dewaxing process or method.

In order to meet the demand, there has been proposed a process for lowering the pour point of a hydrocarbon fraction in which zeolite catalysts are used to selectively convert and remove waxes from the hydrocarbon fraction. The following three types of zeolites are known for use as the catalyst:-
(1) Zeolites capable of absorbing n-paraffin but incapable of adsorbing hydrocarbons having a larger molecular diameter than iso-paraffin: zeolite A (Canadian Patent No. 877,293), Elionite (United States Patent No. 3,575,846).
(2) Zeolite capable of adsorbing n-paraffin and monomethyl-substituted paraffin but incapable of adsorbing hydrocarbons containing a quaternary carbon atom such as 2,2-dimethylbutane: ZSM-5 zeolite (United States Patent No. 3,700,585 and Re. No. 28,398).
(3) Zeolite capable of adsorbing a hydrocarbon containing a quaternary carbon atom such as neopentane and having a pore smaller than zeolite Y: Mordenite (United States Patent No. 3,516,925).

Because n-paraffin which is one of main components of wax has a molecule diameter of about 0.5 nm (5 angstrom), these prior art techniques make use of zeolites having a relatively small pore diameter in order to increase the selectivity on a decomposition reaction of n-paraffin. With regard to the above-mentioned three types of zeolite, it is considered suitable to have pores capable of adsorbing monomethyl-substituted paraffin. Various attempts have been made to improve catalysts based on ZSM-5 zeolite. As a result, there has been proposed use of ZSM-23, 35 zeolites having a pore size between those of (1) and (2) (United States Patent No. 4,222,855).

However, these prior art techniques have a number of drawbacks: catalysts used are very expensive; catalytic activities are unsatisfactory, so that undesirably high reaction temperatures are required or a catalyst life is relatively short; and a recovery of dewaxed oil is low. Accordingly, there is desired a development of a catalyst which has high catalytic activity, high selectivity and long life. We have made intensive studies on a dewaxing process of hydrocarbon fractions and unexpectedly found that, contrary to the teachings of United States Patent No. 3,700,585, pentasil-type zeolite which has a relatively large pore size sufficient to adsorb hydrocarbons containing a quaternary carbon atom such as 2,2-dimethylbutane is excellent as a catalyst of high activity.

Our earlier EP-A-57016 discloses the synthesis of zeolites amongst which are some which may be used in the process in accordance with the present invention. These synthesised zeolites are indicated as being useful as cracking catalysts for hydrocarbons.

It is an object of the present invention to provide a dewaxing process of hydrocarbon fractions in an atmosphere of hydrogen in the presence of an improved catalyst.

It is another object of the invention to provide a dewaxing process of hydrocarbon fractions whereby dewaxed oil is obtained in high yield.

It is a further object of the invention to provide a dewaxing process of hydrocarbon fractions in the presence of a zeolite catalyst whereby high activity can be maintained with reaction temperatures at a level lower than those of prior art techniques.

The above objects can be achieved by using a catalyst which comprises a zeolite having in its alkaline form an X-ray diffraction pattern shown in Table 1 and the capacity of adsorption of mesitylene (1,3,5-trimethylbenzene) in an amount not smaller than 1.8 wt%.

Use of the specific type of zeolite which exhibits such a specific adsorption amount of mesitylene as defined above improves diffusion of the reactant to active sites and desorption of the resulting reaction product from the sites. Thus, the reaction activity increases with reduction of secondary, side reactions of the product.

The catalyst used in the practice of this invention can yield a high recovery of dewaxed oil and exhibits high activity as will be particularly shown in examples appearing hereinafter. When known catalysts are used, large amounts of (1) LPG and (2) naphtha or gasoline are secondarily produced as by-products by the dewaxing reaction. The values of these materials greatly vary depending on the balance of supply and demand of petroleum and other factors. Accordingly, the high level of recovery of dewaxed oil contributes to increase the economical stability of the dewaxing process. This is very advantageous from the industrial standpoint. The catalyst has such a high activity that reaction temperatures can be set at a lower level than in the case of known catalysts. Thus a long-run operation becomes possible while suppressing thermal deterioration of hydrocarbon oils. The dewaxed oil obtained has good colour and good stability.

In the drawings:
Fig. 1 is an X-ray diffraction pattern of a zeolite used in Example 1; and
Fig. 2 is an X-ray diffraction pattern of a zeolite used in Comparative Example 2.

Feedstocks used in the present invention include various hydrocarbon fractions containing wax which are obtained, for example, from crude oil, sand oil, and coal. Virgin or desulphurised gas oil, and vacuum gas oil fraction from distillation plant or thermal-cracking plant are suitable for producing fuel oils having improved fluidity. Vacuum distillates having boiling points ranging from about 300°C to 550°C, which are called light, medium and heavy neutral stocks, and solvent deasphalted vacuum residue named bright stock are suitable for producing lubricating oil base. If necessary, these distillates may be refined by solvent extraction for example, a furfural or phenol method, in order to improve viscosity index, stability and colour.

In the reaction of the invention, an acid type zeolite is used as a catalyst, and it is preferred that contents of water, nitrogen-containing compounds, and residual carbon of feedstocks are small. These impurities should preferably be reduced so that the moisture content is below 1000 ppm, the nitrogen content is below 1000 ppm, and the residual carbon content is below 1.0 wt%. Most preferably, the moisture content is below 500 ppm, the nitrogen content is below 500 ppm, and the content of carbon residue is below 0.5 wt%.

The zeolite used in the present invention should have, in its alkaline form, an X-ray diffraction pattern shown in Table 1, more preferably an X-ray pattern shown in Table 2. The diffraction pattern is obtained by X-ray irradiation from the K-α ray of copper using a Geiger counter spectrometer. From the diffraction pattern, a relative intensity 100 I/I_{MAX} in which I_{MAX} represents the strongest line and d spacing (nm) are determined.

**TABLE 1**

| X-ray diffraction pattern | |
|---|---|
| d(nm) | 100 I/I_{MAX} |
| 1.12±0.02 | S |
| 1.01±0.02 | S |
| 0.386±0.008 | VS |
| 0.372±0.008 | S |
| 0.366±0.005 | M |

**TABLE 2**

| X-ray diffraction pattern | |
|---|---|
| d(nm) | 100 I/I_{MAX} |
| 1.12±0.02 | S |
| 1.01±0.02 | S |
| 0.98±0.02 | M |
| 0.637±0.01 | W |
| 0.600±0.01 | W |
| 0.571±0.01 | W |
| 0.558±0.01 | W |
| 0.437±0.008 | W |
| 0.427±0.008 | W |
| 0.386±0.008 | VS |
| 0.382±0.008 | VS |
| 0.375±0.008 | S |
| 0.372±0.008 | S |
| 0.366±0.005 | M |
| 0.300±0.005 | M |
| 0.200±0.005 | W |

In the above tables, the relative intensity, 100 I/I_{MAX} is evaluated as follows: VS=very strong; S=strong; M=medium; and W=weak.

The zeolite used in the present invention may be represented by the following formula

(1.0±0.2)M_{2/n}O · Al₂O₃ · XSiO₂ · YH₂O

in which M represents hydrogen cation or a precursor thereof, n is the valence of M, X is a value ranging from 20 to 35, and Y is a value ranging from 0 to 25.

The zeolite of the invention in acidic form should adsorb mesitylene in an amount not smaller than 1.8 wt%.

The adsorption of mesitylene is determined according to a method prescribed in JIS K-1412. A zeolite is fully subjected to a dealkalization treatment using an aqueous ammonium chloride solution. Subsequently, the sample is shaped, without use of any binder, to have a size of 20-32 mesh and calcined at 550°C for 16 hours in air. The resulting zeolite is subjected to the adsorption test using the following conditions.

| | |
|---|---|
| Amount of adsorbent | about 4 g |
| Adsorption temperature | 25°C |
| Carrier gas | N₂, 800N-ml/min |
| Partial pressure of mesitylene | 0.5 mmHg |
| Adsorption time | 6 hours |

Preparation of the zeolite used in the present invention is not limited to any specific methods as long as the resulting zeolite has such characteristics as indicated hereinbefore.

A typical process of preparing the zeolite is described below. An aqueous reaction mixture comprising silica, alumina and alkali sources, and an organic compound containing carboxyl groups (which are, respectively, represented by SiO₂, Al₂O₃, OH⁻, and A) in the following molar ratios is provided and subjected to reaction until crystals are formed, thereby obtaining a zeolite.

| | |
|---|---|
| SiO₂/Al₂O₃ | 20-60 |
| H₂O/SiO₂ | 5-100 |
| OH⁻/SiO₂ | 0.1-0.35 |
| A/Al₂O₃ | up to 100 |

Examples of the silica source include silica sol, silica gel, silica aerogel, silica hydrogel, silicic acid, silicates and sodium silicate.

Likewise, examples of the alumina source include sodium aluminate, aluminium sulphate, aluminium nitrate, alumina sol, alumina gel, active alumina, gamma-alumina and alpha-alumina.

Examples of the alkali source include caustic soda and caustic potash of which caustic soda is preferred. These alkali sources are added to the reaction system so that OH⁻ is preferably present in the reaction mixture.

The organic compounds containing carboxyl groups include, for example, aromatic, aliphatic and alicyclic carboxylic acids. The organic compounds may contain, aside from carboxyl groups, other functional groups such as, for example hydroxyl or amino groups. Typical examples of the organic compound include succinic acid, tartaric acid, citric acid, toluic acid, and salicylic acid. These organic acids are considered to be converted to alkali metal salts thereof in the reaction system. In this sense, they may be used after conversion to an alkali metal salt.

The resulting aqueous reaction mixture is converted to a slurry to an extent as uniform as possible and is placed for crystallization in a closed container such as, for example, an iron, stainless steel or fluorocarbon resin-lined autoclave. The reaction conditions for the crystallization include a reaction temperature of 80-250°C, preferably 100-200°C, and a reaction time of from 5 hours to 30 days, preferably from 10 hours to 10 days. It is convenient that during the course of the crystallization, the reaction mixture is continuously or periodically agitated so as to be kept uniform. After cooling, the crystallized reaction product is withdrawn from the closed container, followed by washing with water, filtering and, if necessary, drying. The resulting crystalline aluminosilicate has such an X-ray diffraction pattern as in Table 2.

The adsorption of mesitylene can be controlled to be not smaller than 1.8 wt% by suitable selection of the ratio of the starting silica and alumina and the type of organic compound.

The crystalline aluminosilicate thus obtained is alkaline type and has not adequate solid acidity. In the practice of the invention, the crystalline aluminosilicate should be converted to the acid type. As is well known in the art, acid-type crystalline aluminosilicate has, as cations, hydrogen ion, ammonium ion, or divalent or polyvalent cations such as rare earth element ions therein. This is attained by exchanging at least a part, e.g. 50% or more, of monovalent alkali metal ions, such as sodium ions, of crystalline aluminosilicate with hydrogen ions, ammonium cations or polyvalent cations. This ion exchange is preferably effected as follows: crystalline alumino-silicate is treated with a solution containing an acid and/or an ammonium salt compound in order to introduce hydrogen ions and/or hydrogen ion precursors into the crystalline aluminosilicate. The ion exchange treatment is ordinarily conducted by the use of an aqueous solution. The acids useful for the above purpose are inorganic or organic acids. Inorganic acids are usually used. Examples of the inorganic acid include hydrochloric acid, nitric acid, phosphoric acid and carbonic acid. As a matter of course, any other acids containing hydrogen ions may be used. Use of an inorganic acid as a solution of high concentration is unfavourable because crystalline aluminosilicate may change in structure. A favourable concentration of acid greatly varies depending on the type of acid and cannot be determined conditionally. Care should be paid to the use of acid so that no great change takes place in the structure of the aluminosilicate.

The ammonium compounds include, for example, inorganic ammonium salts such as ammonium nitrate, ammonium chloride, ammonium sulphate and ammonium carbonate, liquid ammonia and ammonium salts of organic acids, such as ammonium formate, ammonium acetate and ammonium citrate. Preferably, inorganic ammonium salts are used. The ammonium salt is preferably used as a 0.05 to 2N solution, and most preferably as an about 0.1 to 2N solution. The ion exchange treatment of crystalline aluminosilicate with an acid and/or an ammonium salt solution is effected either in a batch-wise method or continuous method. If the batch method is used, the liquid-to-solid ratio should be determined such that crystalline aluminosilicate adequately contacts with the solution. In particular, the solution is preferably used in an amount not smaller than about 1 litre/kg with a treating time in the range of from about 0.1 to 72 hours, preferably about 0.5 to 24 hours. The treating temperature may be below the boiling point of the system. The reaction is preferably effected under heating conditions in order to increase the ion exchange speed. Where the treatment is effected in a continuous method, a fixed bed or fluidized bed system is utilized. In this case, care should be taken in order to avoid occurrence of non-uniform flow in the system and to avoid the ion exchange treatment proceeding inhomogeneously. The crystalline aluminosilicate obtained by the ion exchange treatment is subsequently washed with water. For this purpose, distilled water is conveniently used and the washing is effected in a batch-wise method or continuous method. In this manner, hydrogen ions and/or ammonium ions, which are hydrogen ion precursor, are introduced into the crystalline aluminosilicate, thereby imparting solid acidity thereto. The crystalline aluminosilicate may contain cations other than hydrogen ions and/or a precursor thereof. Such cations are not limited with respect to the species and the amount.

An apparatus used in the reaction of the invention may use either a fixed bed or a fluidized bed. Preferably, a fixed bed system is used because of its simple construction and ease in operation. With the fixed bed system, a smaller size of catalyst is preferable from the standpoint of an effective catalysis. However, too small a size is unfavourable because the pressure drop increases. Accordingly, the size of catalyst particles should be within a certain range. The size is generally in the range of from 0.05 to 10 mm, preferably 0.3 to 3 mm. The prepared crystalline aluminosilicate is ordinarily in the form of powder. Accordingly, use of the aluminosilicate as a catalyst having the above-defined range of particle size needs proper agglomeration or shaping. Production of shaped catalyst may be performed by a conventional method, for instance tabletting, extruding, pelletizing or the like. In case where an extrusion method is used, it is convenient to use a binder in order to improve the productivity of the shaped bodies or impart mechanical strength. Needless to say, if the aluminosilicate can be shaped without use of any binder, no binder is necessary. Examples of the binder include natural clays such as kaolin, bentonite and montmorillonite, and synthetic products such as silica sol, alumina sol, and alumina gel. The amount of the binder is generally in the range below 70 wt%, preferably below 30 wt%. The shaping may be effected prior to or after the ion exchange treatment of crystalline aluminosilicate. The catalyst used in accordance with the present invention may be admixed with a component useful for hydrogenation such as palladium, platinum, rhenium, ruthenium, nickel, molybdenum, tungsten and vanadium in order to improve activity, selectivity and the life of the catalyst. These hydrogenation components may be added to the aluminosilicate catalyst by kneading, impregnation, physical mixing or ion exchanging. Although the manner of the addition is not limited to the techniques mentioned above, it is favourable from the viewpoint of activity and selectivity to uniformly disperse the hydrogenation component throughout aluminosilicate particles. In this sense, a kneading or impregnation technique is preferred because of good dispersion of the hydrogenation component over the aluminosilicate catalyst. The amount of palladium, platinum, rhenium or ruthenium is in the range of 0.01 to 3 wt%, preferably 0.05 to 0.5 wt% as an element. With nickel, molybdenum, tungsten or vanadium, its amount is in the range of 0.1 to 10 wt%, preferably 0.2 to 5 wt%.

The catalyst of the invention which has been prepared as described hereinbefore may be dried and calcined prior to use in the following manner. The catalyst is dried at a temperature of from 50 to 250°C for over 0.1 hour, preferably 0.5 to 48 hours. The dried catalyst is subsequently calcined at a temperature of from 300 to 700°C, preferably 400 to 600°C, for over 0.1 hours, preferably 0.5 to 24 hours. The calcination is carried out in air, in an inert gas or in an atmosphere of air or an inert gas and water vapour. By the calcination, the ammonium ions introduced by the ion exchange treatment are converted into hydrogen ions. When the calcination temperature is increased, the aluminosilicate is converted to a decationized type. The decationized aluminosilicate may also be used in the practice of the invention.

The thus prepared catalyst may be used under the following reaction conditions. The reaction temperature is in the range of from 200 to 500°C, preferably from 250 to 450°C. The reaction pressure is in the range of from atmospheric to 100 kg/cm²G. preferably from 10 kg/cm²G. to 70 kg/cm²G. The liquid hourly space velocity (LHSV) which means a contact time for reaction is in the range of from 0.1 to 10 hr⁻¹, preferably 0.5 to 4 hr⁻¹. The ratio of hydrogen to hydrocarbon ranges from 100 to 1000 N-m³/m³, preferably 200 to 800 N-m³/m³.

The present invention is described by way of examples, in which catalytic performance was evaluated under the following reaction conditions.

| Reaction conditions | |
|---|---|
| LHSV (hr⁻¹) | 2.0 |
| Reaction pressure (kg/cm²G) | 35 |
| H₂/Feed (N-ml/ml) | 500 |

The reaction temperature was changed according to the catalytic activity so that the pour point of 165°C⁺ or 270°C⁺ fraction of the reaction point was kept at a predetermined level.

### Example 1

9.22 g of solid caustic soda and 12.5 g of tartaric acid were dissolved in 344.2 g of water. To the solution was added 17.5 g of a sodium aluminate solution to give a homogeneous solution. 66.0 g of silicic acid was gradually added to the solution while agitating, thereby obtaining an aqueous reaction mixture as a uniform slurry. The reaction mixture had the following composition (by mole).

| | |
|---|---|
| SiO₂/Al₂O₃ | 30 |
| H₂O/SiO₂ | 20 |
| OH⁻/SiO₂ | 0.17 |
| A/Al₂O₃ | 2.5 |

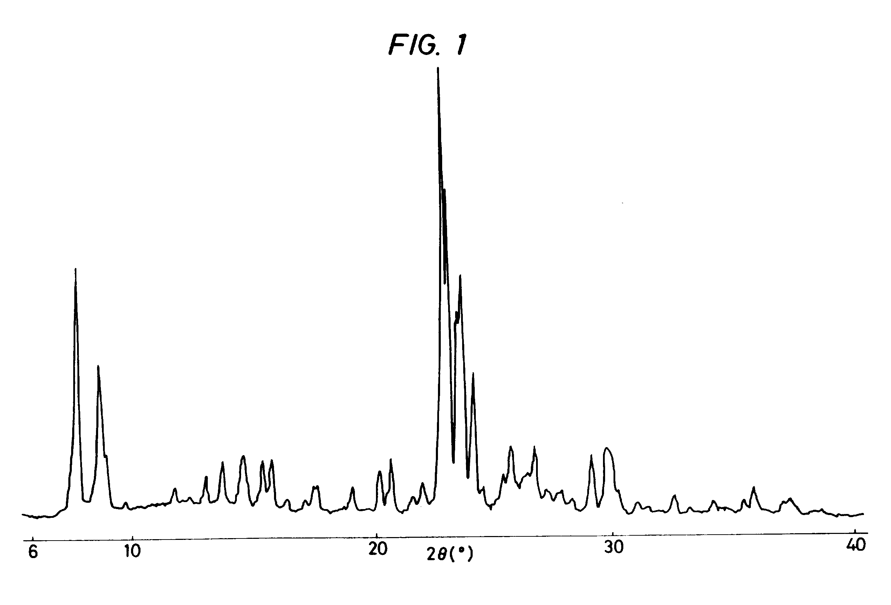

The mixture was placed in a 500 ml autoclave and tightly closed. Thereafter, the content was heated at 160°C under agitation, followed by crystallization over 72 hours. After completion of the crystallization, the resulting product was taken out from the autoclave, followed by washing with distilled water until the pH became approximately neutral, filtering and drying at 110°C overnight. The resulting product was found to be a zeolite having such an X-ray diffraction pattern as shown in Fig. 1 and an adsorption of mesitylene of 2.1 wt%. The thus obtained zeolite powder was subjected to the ion exchange treatment in a batch-wise manner for 30 minutes by heating it in an aqueous 0.187N ammonium chloride solution in a liquid-to-solid ratio of 5 (l/kg) at a temperature of 80 to 90°C. Subsequently, the treated powder was sufficiently washed with water and dried overnight at 110°C. The thus dealkalized zeolite powder was admixed with alumina sol as a binder in an amount of 15 wt% calculated as alumina (Al₂O₃), followed by kneading satisfactorily. After the kneading, the mixture was shaped into particles having a size of 10-24 mesh (JIS sieve), and then dried at 110°C overnight and calcined at 500°C for 2 hours in air. The resulting catalyst was used to effect the dewaxing reaction of a desulphurized vacuum gas oil. Ten days after start of the reaction, the reaction temperature reached 334°C and the pour point of 165°C⁺ fraction of the product was found to be -15°C. An increasing rate of the reaction temperature necessary for maintaining the pour point was 5.8°C/day. The yield of 165°C⁺ fraction was 85.3 wt% and bromine number of this fraction was 1.8.

The catalyst was evaluated using gas oil, with the result that 10 days after start of the reaction, the reaction temperature reached 327°C and the pour point of 165°C⁺ fraction of the product was -20°C. The increasing rate of the reaction temperature necessary for maintaining the pour point was 6.0°C/day. The yield of the 165°C⁺ fraction was found to be 86.4%.

The desulphurized vacuum gas oil and the gas oil used in the above reaction had the following properties.

| | Desulphurized gas oil | Gas oil |
|---|---|---|
| Boiling point (10-90%) (°C) | 320-490 | 227-359 |
| Pour point (°C) | +32.5 | +12.5 |
| Total sulphur (wt%) | 0.08 | 0.58 |
| Total nitrogen (wt ppm) | 400 | 150 |
| Carbon residue (wt%) | 0.05 | 0.01 |

### Example 2

The procedure of Example 1 was repeated using, instead of tartaric acid, the following carboxylic acids, thereby obtaining zeolites. The reaction mixtures had the following compositions (by mole).

| A | Succinic acid | o-Toluic acid | Citric acid | Salicylic acid |
|---|---|---|---|---|
| SiO₂/Al₂O₃ | 30 | 30 | 30 | 30 |
| H₂O/SiO₂ | 20 | 20 | 20 | 20 |
| OH⁻/SiO₂ | 0.14 | 0.17 | 0.14 | 0.17 |
| A/Al₂O₃ | 2.5 | 2.5 | 2.5 | 2.5 |

The resulting products were found to be zeolites having substantially the same X-ray diffraction pattern as in Fig. 1. The zeolites obtained using succinic, o-toluic citric and salicylic acids had mesitylene adsorptions of 1.8, 1.8, 2.0 and 1.9 wt%, respectively.

The thus obtained zeolites were rendered acidic in the same manner as in Example 1 and shaped to obtain catalysts. The catalysts were each used for an evaluation test using desulphurized vacuum gas oil.

The reaction temperature at which 165°C⁺ fraction of the product had the pour point of -15°C, 10 days after start of the reaction, increasing rate of the reaction temperature necessary for maintaining the pour point, and yield of the 165°C⁺ fraction were summarized as follows.

| Carboxyl group-containing compound | Succinic acid | o-Toluic acid | Citric acid | Salicylic acid |
|---|---|---|---|---|
| Reaction temperature (°C) | 344 | 341 | 336 | 337 |
| Increasing rate of reaction temperature (°C/day) | 5.7 | 5.8 | 6.1 | 5.3 |
| Yield of 165°C⁺ fraction (%) | 83.7 | 82.5 | 84.9 | 84.0 |
| Bromine number of 165°C⁺ fraction | 2.9 | 2.8 | 2.1 | 2.4 |

### Example 3

The zeolite obtained in Example 1 was rendered acidic and shaped in the same manner as in Example 1. Thereafter, aqueous solutions of chloroplatinic acid, palladium nitrate, and nickel nitrate were, respectively, impregnated in the zeolite particles in amounts of 0.2 wt% as Pt, 0.2 wt% as Pd, and 1.0 wt% as Ni. After the impregnation of each metal component, the zeolite particles were dried at 110°C overnight and calcined at 500°C for 2 hours in air. The resulting catalysts were used for the dewaxing reaction of desulphurized vacuum gas oil.

With regard to the respective catalyst, the reaction temperature at which 165°C⁺ fraction of the product had the pour point of -10°C, 5 days after start of the reaction, an incresaing rate of the reaction temperature necessary for maintaining the pour point, and yield 165°C⁺ fraction were summarized as follows.

| Metal component | Pt | Pd | Ni |
|---|---|---|---|
| Reaction temperature (°C) | 263 | 286 | 283 |
| Increasing rate of reaction temperature (°C/day) | 1.9 | 3.8 | 2.9 |
| Yield of 165°C⁺ fraction (%) | 84.4 | 86.4 | 86.9 |
| Bromine number of 165°C⁺ fraction | 1.5 | 1.9 | 1.8 |

### Example 4

The general procedure of Example 1 was repeated except that an aqueous reaction mixture of the following composition (by mole) was used.

| | |
|---|---|
| SiO₂/Al₂O₃ | 25 |
| H₂O/SiO₂ | 20 |
| OH⁻/SiO₂ | 0.16 |
| A/Al₂O₃ | 1.0 |

The resulting product was a zeolite having substantially the same X-ray diffraction pattern as shown in Fig. 1 and a mesitylene adsorption of 1.9 wt%.

The zeolite was rendered acidic and shaped to give a catalyst in the same manner as in Example 1. The catalyst was evaluated in the same manner as in Example 1 using desulphurized vacuum gas oil. Five days after start of the reaction, the reaction temperature reached 310°C and the pour point of 165°C⁺ fraction of the product was -15°C. The increasing rate of the reaction temperature necessary for maintaining the pour point was 6.2°C/day. The yield of the 165°C⁺ fraction was 83.8 wt% and bromine number of this fraction was 2.7.

### Comparative Example 1

The procedure of Example 1 was repeated using an aqueous reaction mixture having the following composition (by mole), thereby obtaining a zeolite.

| | |
|---|---|
| SiO₂/Al₂O₃ | 95 |
| H₂O/SiO₂ | 25 |
| OH⁻/SiO₂ | 0.32 |
| A/Al₂O₃ | 7.0 |

The resulting product was a zeolite having substantially the same X-ray diffraction pattern as shown in Fig. 1 and a mesitylene adsorption of 0.7 wt%.

The zeolite product was rendered acidic and shaped to give a catalyst in the same manner as in Example 1. The catalyst was evaluated using desulphurized vacuum gas oil. Ten days after start of the reaction, the reaction temperature reached 395°C and the pour point of 165°C⁺ fraction of the product was -15°C. The increasing rate of the reaction temperature necessary for maintaining the pour point was 7.1°C/day. The yield of the 165°C⁺ fraction was 79.3 wt% and the bromine number of this fraction was 4.3.

### Comparative Example 2

Zeolite ZSM-5 was prepared according to the process described in United States Patent No. 3 702 886. The preparation conditions were indicated below.

| Starting materials (g) | |
|---|---|
| A. Hydrous silicic acid | 68.3 |
| B. Sodium aluminate solution | 10.5 |
| C. Aqueous tetrapropylammonium hydroxide solution (25% aqueous solution) | 439.4 |

| Composition of reaction mixture (by mole) | |
|---|---|
| SiO₂ | 1.00 |
| Al₂O₃ | 0.02 |
| Na₂O | 0.034 |
| [(CH₃CH₂CH₂)₄N]₂O | 0.31 |
| H₂O | 20 |

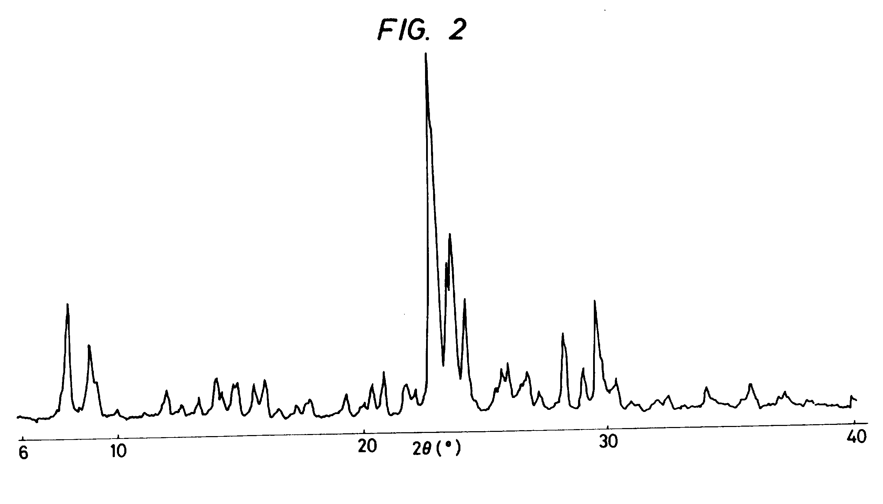

The starting material A was added to C to give a uniform solution. To the solution was gradually added starting material B, followed by agitating to obtain a uniform slurry reaction mixture. The reaction mixture was charged into an autoclave and heated to 160°C while agitating, followed by crystallization for 72 hours. After completion of the crystallization, the crystals were washed with water to such an extent that they became approximately netural. Thereafter, the washed crystals were dried at 120°C for 15 hours. The resulting zeolite was zeolite ZSM-5 having such an X-ray diffraction pattern as shown in Fig. 2 and a mesitylene adsorption of 0.8 wt%.

The thus obtained ZSM-5 zeolite was shaped, calcined, exchanged with ammonium ions, and calcined to obtain a catalyst. This catalyst was evaluated using desulphurized vacuum gas oil. Ten days after start of the reaction, the reaction temperature reached 374°C and the pour point of 165°C⁺ fraction of the product was -15°C. The increasing rate of the reaction temperature necessary for maintaining the pour point was 8.3°C/day. The yield of the 165°C⁺ fraction was 77.8% and the bromine number of this fraction was 4.1.

### Comparative Example 3

Synthetic Mordenite (Zeolon 100NA, Norton Co., Ltd.) was rendered acidic and shaped to give a catalyst in the same manner as in Example 1. The catalyst was subjected to the evaluation test using desulphurized vacuum gas oil. As a result it was found that even when the reaction temperature was increased up to 400°C, a distillate having a boiling point over 165°C had not a pour point below -10°C. The mordenite catalyst had a mesitylene adsorption of 2.3 wt% and thus the requirements of the present invention were satisfied. However, d spacing (nm) obtained from the X-ray diffraction pattern is just as shown below and is thus different from those of Table 1.
d (nm): 0.702, 0.655, 0.453, 0.400, 0.348, 0.339, 0.321.

### Example 5

A vacuum gas oil having the following properties was used as feedstock.

| | |
|---|---|
| Specific gravity (15/4°C) | 0.9122 |
| Pour point | 25.0°C |
| Kinematic viscosity (98.9°C) | 5.810 cst. (5.801 × 10⁻⁶m²s⁻¹) |
| Viscosity index | 66 |

The starting oil was fed to the bottom of an extraction tower and was subjected to the countercurrent extraction with furfural fed from the top of the extraction tower. The extraction temperatures were 90°C at the inlet side for the furural and 65°C at the outlet side. The furfural was used in an amount of 1.2 parts by volume per unit part by volume of the starting oil. The discharge from the tower top was subjected to distillation to remove the furfural solvent therefrom, thereby obtaining raffinate having the following properties. The raffinate was obtained in a yield of 78.5 wt%.

| | |
|---|---|
| Specific gravity (15/4°C) | 0.8902 |
| Pour point | 30.0°C |
| Kinematic viscosity (@98.9°C) | 5.416 cst. (5.416 × 10⁻⁶m²s₋₁) |
| Viscosity index | 98 |

The thus obtained raffinate was subjected to the dewaxing reaction using the catalyst obtained in Example 1.

The reaction temperature was changed according to the catalytic activity so that pour point of 270°C⁺ product was controlled to be a predetermined temperature. Ten days after start of the reaction, the reaction temperature reached 335°C and the pour point of 270°C⁺ fraction of the product was -10°C. The increasing rate of the reaction temperature necessary for maintaining the pour point was 5.5°C/day.

The yield and properties of the product were as follows.

| | |
|---|---|
| Yield of C₁-C₄ | 4.0 wt% |
| Yield of C₅-270°C fraction | 10.4 wt% |
| Yield of 270°C⁺ fraction [85.6 wt%] | 85.6 wt% |
| Specific gravity (15/4°C) | 0.9072 |
| Pour point | -10.0°C |
| Kinematic viscosity (@98.9°C) | 6.132 cst (6.132×10⁻⁶m²s⁻¹) |
| Viscosity index | 81 |

### Example 6

The zeolites obtained in Example 2 were used for the dewaxing reaction in the same manner as in Example 5. Ten days after start of the reaction, the reaction temperatures at which 270°C⁺ fraction had the pour point of -10°C, the increasing rates necessary for keeping the pour point, and the yield of 270°C⁺ fraction were as follows.

| Carboxylic group-containing compound | Succinic acid | o-Toluic acid | Citric acid | Salicylic acid |
|---|---|---|---|---|
| Reaction temperature (°C) | 347 | 343 | 338 | 338 |
| Increasing rate of reaction temperature (°C/day) | 5.4 | 5.5 | 5.8 | 5.0 |
| Yield of 270°C⁺ fraction (%) | 84.0 | 82.8 | 85.2 | 84.3 |
| Specific gravity (15/4°C) | 0.9089 | 0.9079 | 0.9075 | 0.9080 |
| Pour point (°C) | -10.0 | -10.0 | -10.0 | -10.0 |
| Kinematic viscosity (cst) | 6.073 | 6.091 | 6.105 | 6.111 |
| 98.9°C m²s⁻¹ | 6.073×10⁻⁶ | 6.091×10⁻⁶ | 6.105×10⁻⁶ | 6.111×10⁻⁶ |
| Viscosity index | 81 | 80 | 82 | 81 |

### Comparative Example 4

The catalyst obtained in Comparative Example 1 was used for the dewaxing reaction of the raffinate obtained by extraction with furfural in the same manner as in Example 5. Ten days after start of the reaction, the reaction temperature reached 396°C and the pour point of 270°C⁺ fraction of the product was -10°C. The increasing rate of the reaction temperature necessary for maintaining the pour point was 6.9°C/day. The yield and properties of the product were as follows.

| | |
|---|---|
| Yield of C₁-C₄ | 5.1 wt% |
| Yield of C₅-270°C fraction | 15.3 wt% |
| Yield of 270°C⁺ fraction | 79.6 wt% |
| Specific gravity (15/4°C) | 0.9101 |
| Pour point | -10.0°C |
| Kinematic viscosity (@98.9°C) | 6.056 cps (6.056×10⁻⁶m²s⁻¹) |
| Viscosity index | 80 |

### Comparative Example 5

The ZSM-5 zeolite catalyst obtained in Comparative Example 2 was used for the dewaxing reaction of the raffinate obtained by extraction with furfural in the same manner as in Example 5.

Ten days after start of the reaction, the reaction temperature reached 375°C and the pour point of 270°C⁺ fraction of the product was -10°C. The increasing rate of the reaction temperature necessary for maintaining the pour point was 8.1°C/day. The yield and properties of the product were as follows.

| | |
|---|---|
| Yield of C₁-C₄ | 5.7 wt% |
| Yield of C₅-270°C fraction | 16.2 wt% |
| Yield of 270°C⁺ fraction | 78.1 wt% |
| Specific gravity (15/4°C) | 0.9095 |
| Pour point | -10.0°C |
| Kinematic viscosity (@98.9°C) | 6.023 cps (6.023×10⁻⁶m²s⁻¹) |
| Viscosity index | 80 |

## Claims

1. A process for dewaxing a hydrocarbon fraction comprising contacting a hydrocarbon fraction with hydrogen in the presence of a catalyst comprising a zeolite having in its alkaline form an X-ray diffraction pattern shown in the following table:
| d(nm) | 100 I/I_{MAX} |
|---|---|
| 1.12±0.02 | S |
| 1.01±0.02 | S |
| 0.386±0.008 | VS |
| 0.372±0.008 | S |
| 0.366±0.005 | M |
being represented by a general formula
(1.0±0.2)M_{2/n}O · Al₂O₃ · XSiO₂ · YH₂O
in which M represents hydrogen cation or a precursor thereof, n is a valence of M, X is a value of from 20 to 35, and Y is a value of from 0 to 25, and having a mesitylene adsorption of not less than 1.8 wt%.

2. A process according to claim 1, wherein said catalyst is shaped to have a size ranging from 0.05 to 10 mm.

3. A process according to either preceding claim, wherein said catalyst substantially consists of said zeolite.

4. A process according to claim 1 or claim 2, wherein said catalyst further comprises a binder therefor.

5. A process according to any one of claims 1, 2 and 4, wherein said catalyst further comprises a hydrogenation component.

6. A process according to any preceding claim wherein said zeolite is obtained by providing an aqueous reaction mixture of SiO₂, Al₂O₃, an alkaline source as OH⁻, and a carboxyl group-containing organic compound having the following composition
| | |
|---|---|
| SiO₂/Al₂O₃ | 20-60 |
| H₂O/SiO₂ | 5-100 |
| OH⁻/SiO₂ | 0.1-0.35 |
| A/Al₂O₃ | up to 100 |
in which A represents the carboxyl group-containing organic compound, and reacting the mixture until crystals are produced.

7. A process according to claim 6, wherein said carboxyl group-containing organic compound is tartaric acid.

8. A process according to claim 6, wherein said carboxyl group-containing organic compound is succinic acid.

9. A process according to claim 6, wherein said carboxyl group-containing organic compound is o-toluic acid.

10. A process according to claim 6, wherein said carboxyl group-containing organic compound is citric

11. A process according to claim 6, wherein said carboxyl group-containing organic compound is salicylic acid.

12. A process according to any preceding claim, wherein the hydrocarbon fraction is a vacuum distillate having a boiling point ranging from about 300°C to 550°C or solvent deasphalted vacuum residue.

13. A process according to any preceding claim, wherein the contact is effected under conditions of a reaction temperature ranging from 250 to 450°C, a pressure ranging from 10 to 70 kg/cm²G, and a liquid hour space velocity ranging from 0.5 to 4.0 hr⁻¹.

14. A process according to the preceding claim, wherein the ratio of the hydrogen to the hydrocarbon fraction is in the range of from 100 to 1000 N-m³/m³.

## Patentansprüche

1. Verfahren zum Entwachsen einer Kohlenwasserstoff-Fraktion, umfassend das In-Kontakt-Bringen einer Kohlenwasserstoff-Fraktion mit Wasserstoff in Gegenwart eines Katalysators, der einen Zeolithen umfaßt, der in seiner alkalischen Form ein Röntgenbeugungsmuster gemäß der nachstehenden Tabelle aufweist,
| d(nm) | 100 I/Iₘₐₓ |
|---|---|
| 1,12±0,02 | S |
| 1,01±0,02 | S |
| 0,386±0,008 | VS |
| 0,372±0,008 | S |
| 0,366±0,005 | M |
der allgemeinen Formel
(1,0 ± 0,2)M_{2/n}O · Al₂O₃ · XSiO₂ · YH₂O
entspricht, worin M ein Wasserstoffkation oder einen Vorläufer davon darstellt, n die Wertigkeit von M ist, X ein Wert von 20-35 ist und Y ein Wert von 0-25 ist, und eine Mesitylen-Adsorption von nicht weniger als 1,8 Gew.-% aufweist.

2. Verfahren nach Anspruch 1, worin der Katalysator so geformt ist, daß seine Größe im Bereich von 0,05-10 mm liegt.

3. Verfahren nach einem der beiden vorangegangenen Ansprüche, worin der Katalysator im wesentlichen aus dem Zeolith besteht.

4. Verfahren nach Anspruch 1 oder 2, worin der Katalysator weiters ein Bindemittel dafür umfaßt.

5. Verfahren nach einem der Ansprüche 1, 2 und 4, worin der Katalysator weiters eine Hydrierungskomponente umfaßt.

6. Verfahren nach einem der vorangegangenen Ansprüche, worin der Zeolith durch Bereitstellen eines wäßrigen Reaktionsgemischs aus SiO₂, Al₂O₃, einer Alkaliquelle wie OH⁻ und einer carboxylgruppenhältigen organischen Verbindung der folgenden Zusammensetzung
| | |
|---|---|
| SiO₂/Al₂O₃ | 20 - 60 |
| H₂O/SiO₂ | 5 - 100 |
| OH⁻/SiO₂ | 0,1 - 0,35 |
| A/Al₂O₃ | bis zu 100 |
worin A die carboxylgruppenhältige organische Verbindung darstellt, sowie durch Umsetzen des Gemischs bis zur Kristallbildung erhalten wird.

7. Verfahren nach Anspruch 6, worin die carboxylgruppenhältige organische Verbindung Weinsäure ist.

8. Verfahren nach Anspruch 6, worin die carboxylgruppenhältige organische Verbindung Bernsteinsäure ist.

9. Verfahren nach Anspruch 6, worin die carboxylgruppenhältige organische Verbindung o-Toluylsäure ist.

10. Verfahren nach Anspruch 6, worin die carboxylgruppenhältige organische Verbindung Zitronensäure ist.

11. Verfahren nach Anspruch 6, worin die carboxylgruppenhältige organische Verbindung Salicylsäure ist.

12. Verfahren nach einem der vorangegangenen Ansprüche, worin die Kohlenwasserstoff-Fraktion ein Vakuumdestillat mit einem Siedepunkt im Bereich von etwa 300-550°C oder ein mit Lösungsmitteln entasphaltierter Vakuumdestillationsrückstand ist.

13. Verfahren nach einem der vorangegangenen Ansprüche, worin der Kontakt unter den Bedingungen einer Reaktionstemperatur von 250-450°C, einem Druck im Bereich von 10-70 kg/cm² und einer auf Stunden bezogene Flüssigkeitsraumgeschwindigkeit im Bereich von 0,5-4,0 h⁻¹ herbeigeführt wird.

14. Verfahren nach einem der vorangegangenen Ansprüche, worin das Verhältnis von Wasserstoff zur Kohlenwasserstoff-Fraktion im Bereich von 100-1.000 Nm³/Nm³ liegt.

## Revendications

1. Procédé pour déparaffiner une fraction hydrocarbonée comprenant la mise en contact d'une fraction hydrocarbonée avec l'hydrogène en présence d'un catalyseur comprenant une zéolithe ayant, sous sa forme alcaline, un diagramme de diffraction aux rayons X présenté dans le tableau suivant :
| d(nm) | 100 I/I_{MAX} |
|---|---|
| 1,12±0,02 | S |
| 1,01±0,02 | S |
| 0,386±0,008 | VS |
| 0,372±0,008 | S |
| 0,366±0,005 | M |
étant représenté par une formule générale
(1,0 ± 0,2)M₂/ₙ0.Al₂0₃.XSi0₂.YH₂0
dans laquelle M représente un cation hydrogène ou un précurseur de celui-ci, n est une valence de M, X est une valeur de 20 à 35 et Y est une valeur de 0 à 25, et ayant une adsorption du mésitylène non inférieure à 1,8% en poids.

2. Procédé selon la revendication 1, dans lequel ledit catalyseur est façonné pour avoir une taille comprise entre 0,05 et 10 mm.

3. Procédé selon l'une des revendications précédentes, dans lequel ledit catalyseur consiste sensiblement en ladite zéolithe.

4. Procédé selon la revendication 1 ou la revendication 2, dans lequel ledit catalyseur comprend en outre un liant pour celui-ci.

5. Procédé selon l'une des revendications 1, 2 et 4, dans lequel ledit catalyseur comprend en outre un constituant d'hydrogénation.

6. Procédé selon l'une des revendications précédentes, dans lequel ladite zéolithe est obtenue en formant un mélange réactionnel aqueux de Si0₂, Al₂0₃, d'une source alcaline en tant que OH⁻, et d'un composé organique contenant des groupes carboxyle ayant la composition suivante
| | |
|---|---|
| SiO₂/Al₂O₃ | 20 - 60 |
| H₂O/SiO₂ | 5 - 100 |
| OH⁻/SiO₂ | 0,1 - 0,35 |
| A/Al₂O₃ | 0 - 100 |
dans laquelle A représente le composé organique contenant des groupes carboxyle, et en faisant réagir le mélange jusqu'à ce que des cristaux soient produits.

7. Procédé selon la revendication 6, dans lequel ledit composé organique contenant des groupes carboxyle est l'acide tartrique.

8. Procédé selon la revendication 6, dans lequel ledit composé organique contenant des groupes carboxyle est l'acide succinique.

9. Procédé selon la revendication 6, dans lequel ledit composé organique contenant des groupes carboxyle est l'acide O-toluïque.

10. Procédé selon la revendication 6, dans lequel ledit composé organique contenant des groupes carboxyle est l'acide citrique.

11. Procédé selon la revendication 6, dans lequel ledit composé organique contenant des groupes carboxyle est l'acide salicylique.

12. Procédé selon l'une des revendications précédentes, dans lequel la fraction hydrocarbonée est un distillat sous vide ayant un point d'ébullition compris entre environ 300°C et 550°C, ou un résidu de distillation sous vide désasphalté au solvant.

13. Procédé selon l'une des revendications précédentes, dans lequel la mise en contact est effectuée dans les conditions d'une température de réaction comprise entre 250 et 450°C, d'une pression comprise entre 10 et 70 kg/cm²G, et d'une vitesse liquide spatiale horaire comprise entre 0,5 et 4,0 h⁻¹.

14. Procédé selon l'une des revendications précédentes, dans lequel le rapport de l'hydrogène à la fraction hydrocarbonée est dans le domaine de 100 à 1000 N-m³/m³.
